# EUROPEAN PATENT APPLICATION

(11) **EP 4 668 987 A1**
(43) Date of publication of application: **24.12.2025**
(21) Application number: 24757285.2
(22) Date of filing: 15.02.2024
(51) Int. Cl.: H04W 72/25, H04W 74/08, H04W 74/00, H04W 74/02, H04W 4/40, H04W 92/18, H04W 24/08, H04W 72/56

(54) **METHOD AND DEVICE FOR PERFORMING WIRELESS COMMUNICATION RELATED TO LBT**

(30) Priority: 15.02.2023 KR 20230020319; 20.02.2023 KR 20230022399; 22.02.2023 KR 20230023251; 22.02.2023 KR 20230023264
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Mooser, Sebastian Thomas
(86) International application number: PCT/KR2024/095222
(87) International publication number: WO 2024/172565

(57) **Abstract**

Proposed are a method for a first device to perform wireless communication and a device for supporting same. For example, the first device may receive information related to COT sharing from a second device. For example, the first device may determine not to use a first resource in the COT. For example, the first device may transmit information related to the non-use of the COT to the second device on the basis of the determination.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In an embodiment, provided is a method for performing wireless communication by a first device. For example, the first device may receive, from a second device, information related to sharing of channel occupancy time (COT). For example, the first device may determine non-use of a first resource in the COT. For example, the first device may transmit, to the second device, information related to the non-use of the COT, based on the determination.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an example of a wireless communication system supporting an unlicensed band, based on an embodiment of the present disclosure.
FIG. 11 shows a method of occupying resources in an unlicensed band, based on an embodiment of the present disclosure.
FIG. 12 shows a case in which a plurality of LBT-SBs are included in an unlicensed band, based on an embodiment of the present disclosure.
FIG. 13 shows CAP operations performed by a base station to transmit a downlink signal through an unlicensed band, based on an embodiment of the present disclosure.
FIG. 14 shows type 1 CAP operations performed by a UE to transmit an uplink signal, based on an embodiment of the present disclosure.
FIG. 15 shows a channel access procedure, based on an embodiment of the present disclosure.
FIG. 16 shows a procedure for generating a MAC PDU when new sidelink data occurs from the logical channel after succeeding in sidelink LBT, based on an embodiment of the present disclosure.
FIG. 17 shows a procedure for generating a MAC PDU when new sidelink data occurs from the logical channel after succeeding in sidelink LBT, based on an embodiment of the present disclosure.
FIG. 18 shows a transmission method within a shared COT, based on an embodiment of the present disclosure.
FIG. 19 shows an operation related to a shared COT, based on an embodiment of the present disclosure.
FIG. 20 shows a method for performing wireless communication related to LBT, based on an embodiment of the present disclosure.
FIG. 21 shows a method for a first device to perform wireless communication, based on an embodiment of the present disclosure.
FIG. 22 shows a method for a second device to perform wireless communication, based on an embodiment of the present disclosure.
FIG. 23 shows a communication system 1, based on an embodiment of the present disclosure.
FIG. 24 shows wireless devices, based on an embodiment of the present disclosure.
FIG. 25 shows a signal process circuit for a transmission signal, based on an embodiment of the present disclosure.
FIG. 26 shows another example of a wireless device, based on an embodiment of the present disclosure.
FIG. 27 shows a hand-held device, based on an embodiment of the present disclosure.
FIG. 28 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (e.g., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

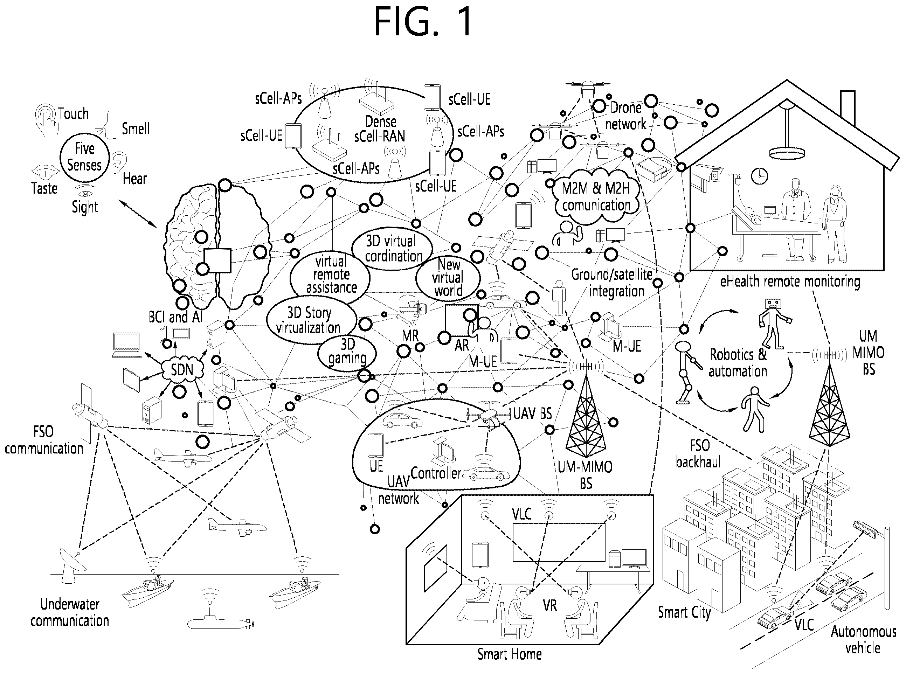

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

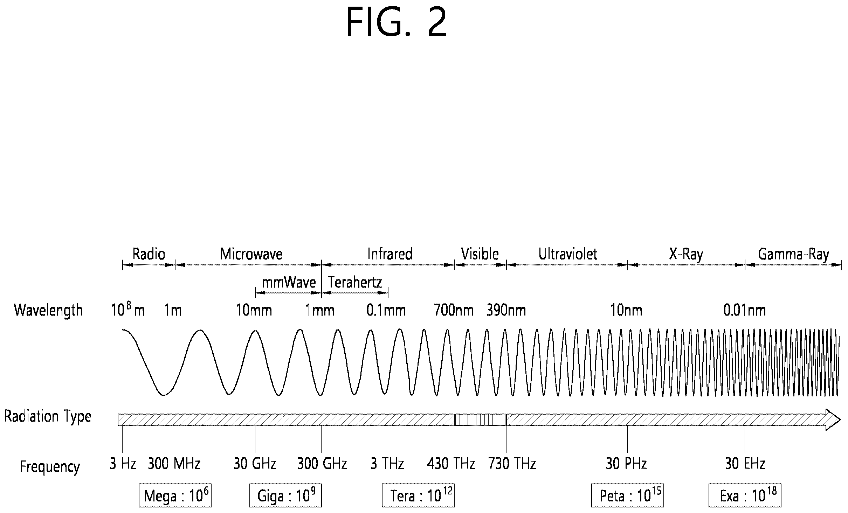

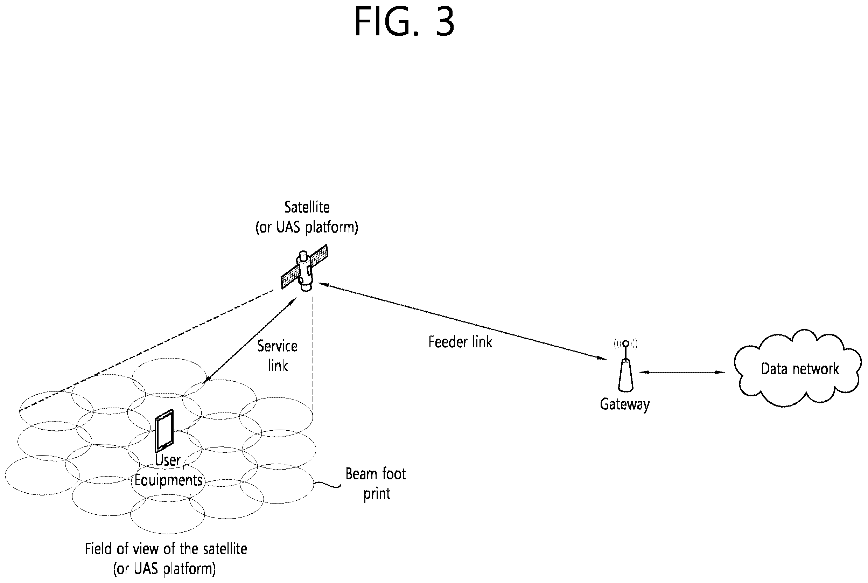

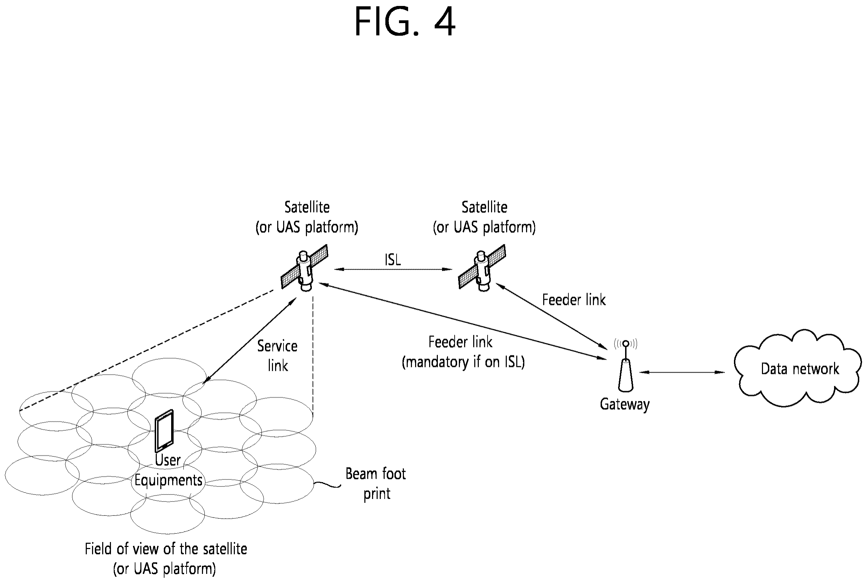

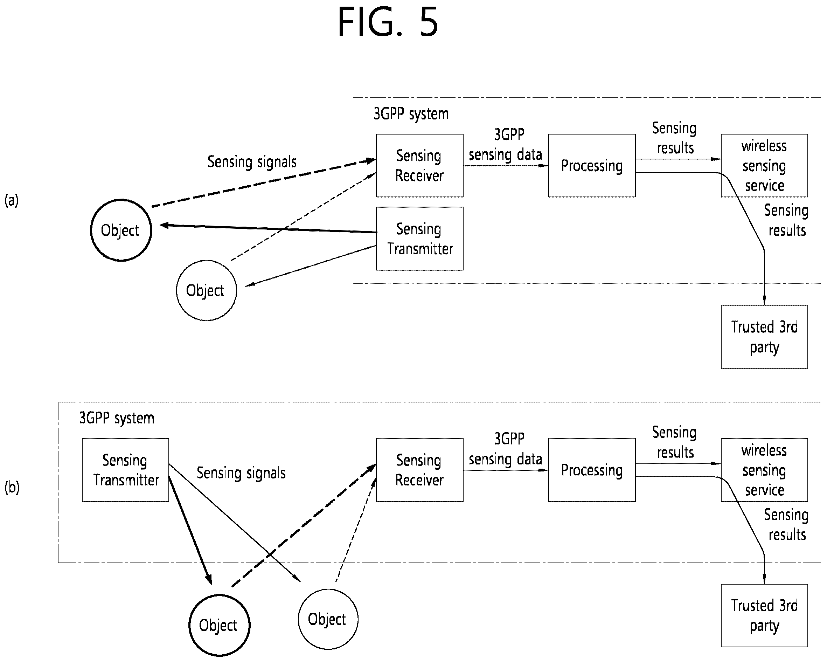

Core implementation technology of 6G system is described below.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, e.g., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, e.g., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, e.g., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (e.g., the physical layer or the PHY layer) and the second layer (e.g., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, e.g., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subtrame,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

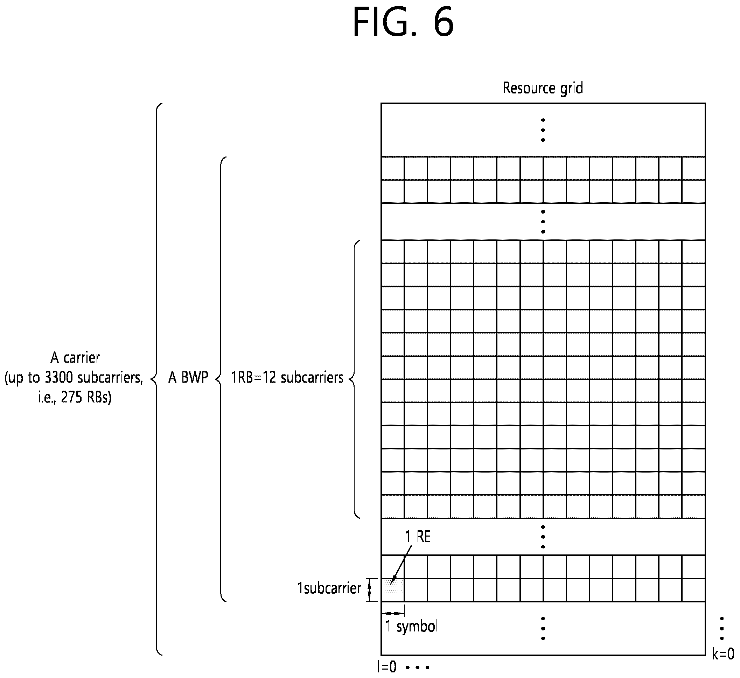

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

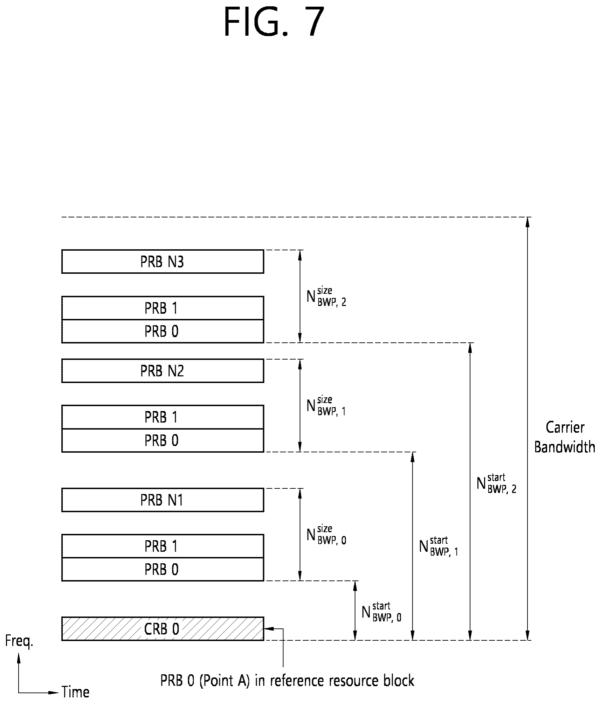

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (e.g., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

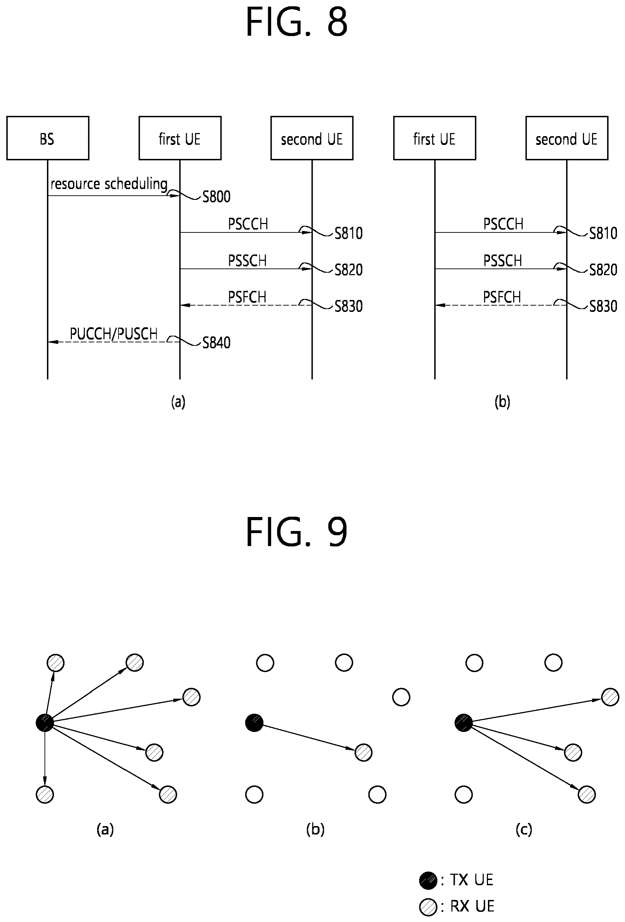

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, an example of a frequency range of a wireless communication system is described.

A frequency band may be defined as two different types of frequency ranges. The two different types of frequency ranges may be FR1 and FR2 (FR2-1 and/or FR2-2). The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. That is, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 may include an unlicensed band. The unlicensed band may be used for diverse purposes, e.g., including communication for vehicles (e.g. autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 (FR 2-1) | 24250MHz - 52600MHz | 60, 120, 240kHz |
| FR2 (FR 2-2) | 52600MHz - 71000MHz | 60, 120, 240, 480, 960 kHz |

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.
(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Meanwhile, based on an embodiment of the present disclosure, in NR-unlicensed, communication between a UE and a base station may be supported in an unlicensed band.

In addition, a mechanism for supporting UE-to-UE communication in an unlicensed band between sidelink UEs may be planned to be supported in Rel-18.

Based on an embodiment of the present disclosure regarding NR-U, for example, channel / channel occupancy / channel occupancy time / LBT (channel access procedure, CAP) type may be as follows.
- **Channel:** A set of frequency domain resources in which LBT is performed. For example, this may refer to 20 MHz LBT bandwidth in NR-U, for example, this may have same meaning as an RB set.
- **Channel occupancy** (CO): This may refer to time/frequency domain resources obtained after LBT success by a base station or a UE.
- **Channel occupancy time** (COT): This may refer to time domain resources obtained after LBT success by a base station or a UE. It is possible to share this between a base station (or a UE) and a UE (or a base station) which has obtained CO, which may be referred to as COT sharing. According to an initiating device, it may also be referred to as gNB-initiated COT or UE-initiated COT.
- LBT types (or channel access procedures) for DL/UL transmission
- Type 1 (e.g., also referred to as Cat-4 LBT): Random back-off based channel access procedure
- Cat-4: The contention window may change.
- Type 2: Can be performed in case of COT sharing within COT acquired by a gNB or a UE
- Type 2A (e.g., also referred to as Cat-2 LBT (one shot LBT) or one-shot LBT): 25 usec one-shot LBT
- TX starts immediately after idle sensing for at least 25 µsec gap
- Can be used to initiate SSB and non-unicast DL information transmission
- Type 2B (16 usec one-shot LBT)
- TX starts immediately after idle sensing for a 16 us gap
- Type 2C (e.g., also referred to as Cat-1 LBT (not performing LBT) or No LBT)
- TX starts immediately after up to 16us gap and does not sense the channel before the transmission
- Duration of the transmission is at most 584 us

Meanwhile, in an unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

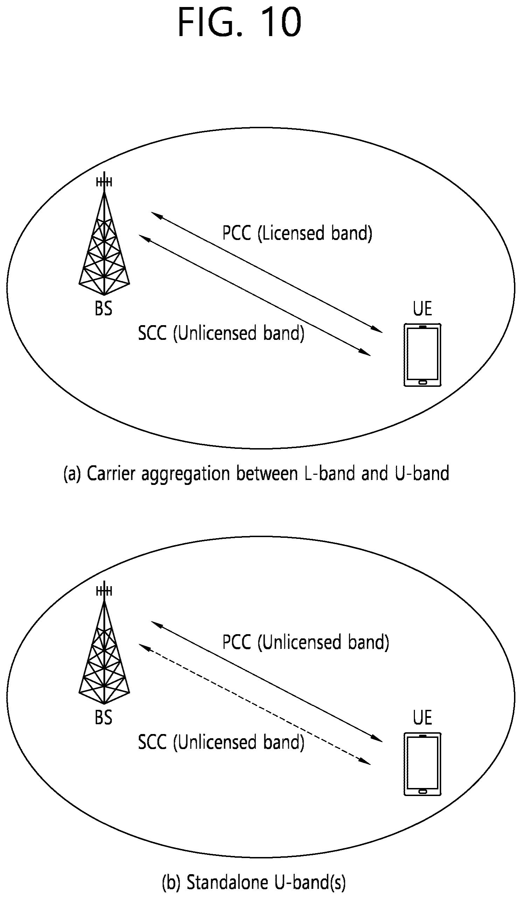

FIG. 10 shows an example of a wireless communication system supporting an unlicensed band, based on an embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tₛₗ = 9 us. The base station or the UE senses a channel during a sensing slot duration. If power detected for at least 4 us within the sensing slot duration is less than an energy detection threshold Xₜₕᵣₑₛₕ, the sensing slot duration Tₛₗ is considered to be idle. Otherwise, the sensing slot duration Tₛₗ = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

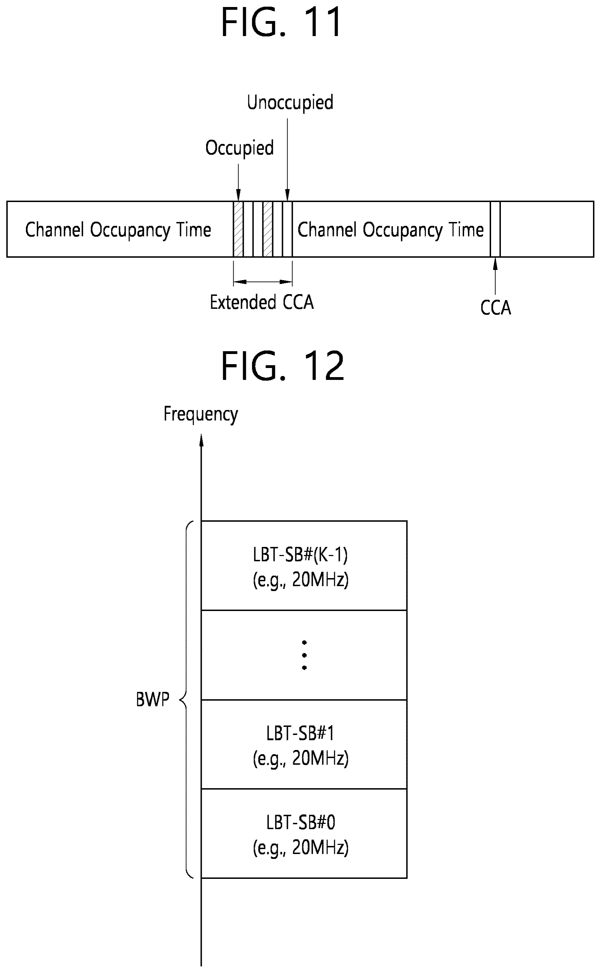

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 8 shows an example of the channel access procedure (CAP) supported in NR-U.

**[Table 8]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 8, the LBT type or CAP for DL/UL/SL transmission may be defined. However, Table 8 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 9 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 9]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

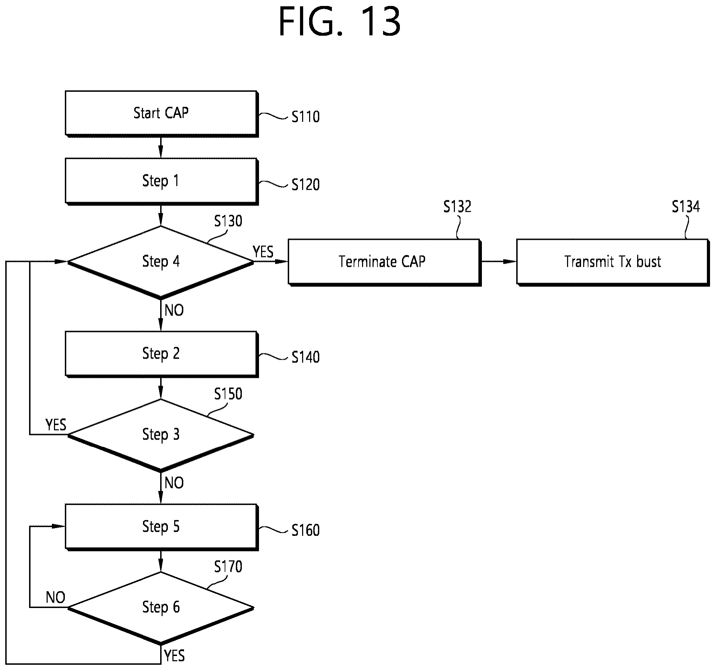

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration T_{d}. Then, if a counter N is zero, the base station may perform transmission (S 134). In this case, the base station may adjust the counter N by sensing the channel for additional sensing slot duration(s) according to the following steps:
Step 1) (S 120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.

Table 10 shows that mₚ, a minimum contention window (CW), a maximum CW, a maximum channel occupancy time (MCOT), and an allowed CW size, which are applied to the CAP, vary depending on channel access priority classes.

**[Table 10]**

| Channel Access Priority Class (p) | mp | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 10, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

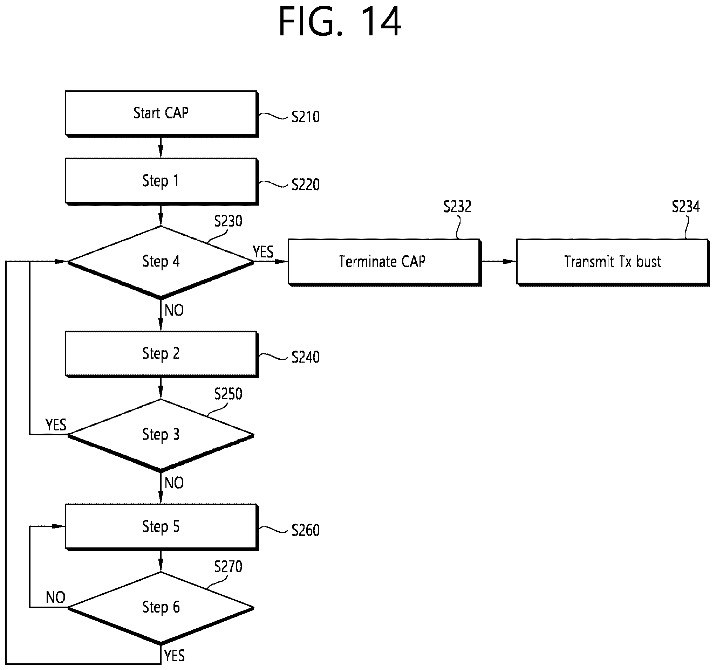

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 11 shows that mₚ, a minimum CW, a maximum CW, a maximum channel occupancy time (MCOT), and an allowed CW size, which are applied to the CAP, vary depending on channel access priority classes.

**[Table 11]**

| Channel Access Priority Class (p) | mp | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 11, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

The embodiment(s) related uplink of the present disclosure, including the embodiment(s) of the channel access priority class (CAPC) related to the uplink described above (or to be described), may also be applied to the embodiment(s) related to sidelink of the present disclosure, including the embodiment(s) of the channel access priority class (CAPC) related to the sidelink below.

According to an embodiment of the present disclosure, for example, a transmitting UE that performs sidelink communication in a sidelink unlicensed band (SL-U) may perform an LBT operation to occupy a channel of the unlicensed band. For example, if the UE succeeds in LBT, it may transmit a packet on the occupied channel. If the LBT fails (for example, when the UE performs sensing during a sensing slot interval and the result of the sensing indicates that the channel is busy), the UE cannot perform the sidelink transmission because it failed to occupy the channel of the unlicensed band.

In the present disclosure, SL-CAPC applied for a sidelink UE to perform LBT in the sidelink unlicensed band may be defined as at least one of the following.

### SL-Channel Access Priority Class (CAPC)

SL-CAPC mapped for each type of data traffic corresponding to SL-CAPC may be defined.

Contention window size (CWS) and maximum COT value for each SL-CAPC may be defined.

SL-CAPC 1 (the highest priority class): The contention window size may be set to the smallest value among the SL-CAPCs. Since the contention window size is the smallest, the time required to occupy the channel may be the shortest. The time consumed for Clear Channel Assessment (a process of determining whether the channel is busy or idle) may be the shortest.
SL-CAPC 2
SL-CAPC 3

SL-CAPC 4 (the lowest priority class): The contention window size may be set to the largest value among the SL-CAPCs. Since the contention window size is the largest, the time required to occupy the channel may be the longest. The time consumed for Clear Channel Assessment (a process of determining whether the channel is busy or idle) may be the longest.

Further, according to an embodiment of the present disclosure, for example, as in Table 12, SL-CAPC may be defined to be mapped to a PQI. For example, SL-CAPC may be defined so that multiple SL-CAPC values are set for the same PQI, and the same SL-CAPC may be mapped to different PQIs.

**[Table 12]**

| **PQI Value** | **Resource Type** | **SL-CAPC** | **Default Priority Level** | **Packet Delay Budget** | **Packet Error Rate** | **Default Maximum Data Burst Volume** | **Default Averaging Window** | **Example Services** |
|---|---|---|---|---|---|---|---|---|
| 21 | GBR | 1,2 | 3 | 20 ms | 10⁻⁴ | N/A | 2000 ms | Platooning between UEs - Higher degree of automation; Platooning between UE and RSU - Higher degree of automation |
| 22 | (NOTE 1) | 2,3 | 4 | 50 ms | 10⁻² | N/A | 2000 ms | Sensor sharing - higher degree of automation |
| 23 | | 2,3 | 3 | 100 ms | 10⁻⁴ | N/A | 2000 ms | Information sharing for automated driving - between UEs or UE and RSU - higher degree of automation |
| 55 | Non-GBR | 1,2 | 3 | 10 ms | 10⁻⁴ | N/A | N/A | Cooperative lane change - higher degree of automation |
| 56 | | 3, 4 | 6 | 20 ms | 10⁻¹ | N/A | N/A | Platooning informative exchange - low degree of automation; Platooning - information sharing with RSU |
| 57 | | 3, 4 | 5 | 25 ms | 10⁻¹ | N/A | N/A | Cooperative lane change - lower degree of automation |
| 58 | | 2,3 | 4 | 100 ms | 10⁻² | N/A | N/A | Sensor information sharing - lower degree of automation |
| 59 | | 3, 4 | 6 | 500 ms | 10⁻¹ | N/A | N/A | Platooning - reporting to an RSU |
| 90 | Delay Critical GBR | 1, 2 | 3 | 10 ms | 10⁻⁴ | 2000 bytes | 2000 ms | Cooperative collision avoidance; |
| | | | | | | | | Sensor sharing - Higher degree of automation; Video sharing - higher degree of automation |
| 91 | (NOTE 1) | 1, 2 | 2 | 3 ms | 10⁻⁵ | 2000 bytes | 2000 ms | Emergency trajectory alignment; |
| | | | | | | | | Sensor sharing - Higher degree of automation |
| | NOTE 1: GBR and Delay Critical GBR PQIs can only be used for unicast PC5 communications. | | | | | | | |

For example, SL-CAPC configuration information may be notified from a base station to a UE through a dedicated RRC message (in the case of an RRC CONNECTED UE) or through a system information block (SIB) (in the case of an IDLE/INACTIVE UE), and may be pre-configured. (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f}(=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time T_{d}(T_{d} = T_{f} + mₚ * Tₛₗ), the UE may attempt to transmit data by occupying the channel. For example, Tₛₗ (= 9 usec) is a basic sensing unit or sensing slots, and may include a measurement duration for at least 4 usec. For example, the front 9 usec of T_{f} (= 16 usec) may be configured to be Tₛₗ.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

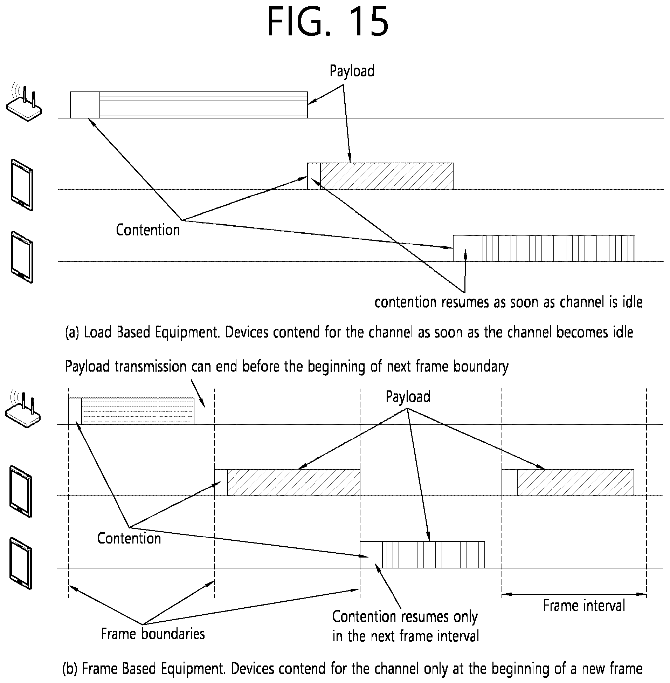

FIG. 15 shows a channel access procedure, based on an embodiment of the present disclosure. The embodiment of FIG. 15 may be combined with various embodiments of the present disclosure.

Specifically, (a) of FIG. 15 shows an example of a dynamic channel access procedure (load based equipment, LBE), and (b) of FIG. 15 shows an example of a semi-static channel access procedure (frame based equipment, FBE). The embodiment of FIG. 15 may be combined with various embodiments of the present disclosure.

Referring to (a) of FIG. 15, if a channel is idle, the UE may perform contention with other UEs on an unlicensed band to immediately occupy the channel. In addition, if the UE occupies the channel, the UE may transmit data.

Referring to (b) of FIG. 15, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins.

For example, in addition, when the transmitting UE completes a MAC PDU generation operation, the transmitting UE may perform an operation of occupying a channel in a sidelink unlicensed band to transmit the generated MAC PDU, and for example, may perform a sidelink LBT operation to find an idle channel and occupy the channel, and for example, may transmit the generated MAC PDU (or transport block (TB)) to a peer UE via the occupied channel.

For example, in addition, when the transmitting UE completes a MAC PDU generation operation, the transmitting UE may perform an operation of occupying a channel in a sidelink unlicensed band to transmit the generated MAC PDU. For example, the transmitting UE may perform a sidelink LBT operation to find an idle channel and occupy the channel, and for example, may transmit the generated MAC PDU (or transport block (TB)) to a peer UE via the occupied channel.

In the present disclosure, when new sidelink data occurs in the logical channel after the transmitting UE generates a MAC PDU and succeeds in sidelink LBT (e.g., Type 1 LBT), an additional MAC PDU generation procedure may be proposed.

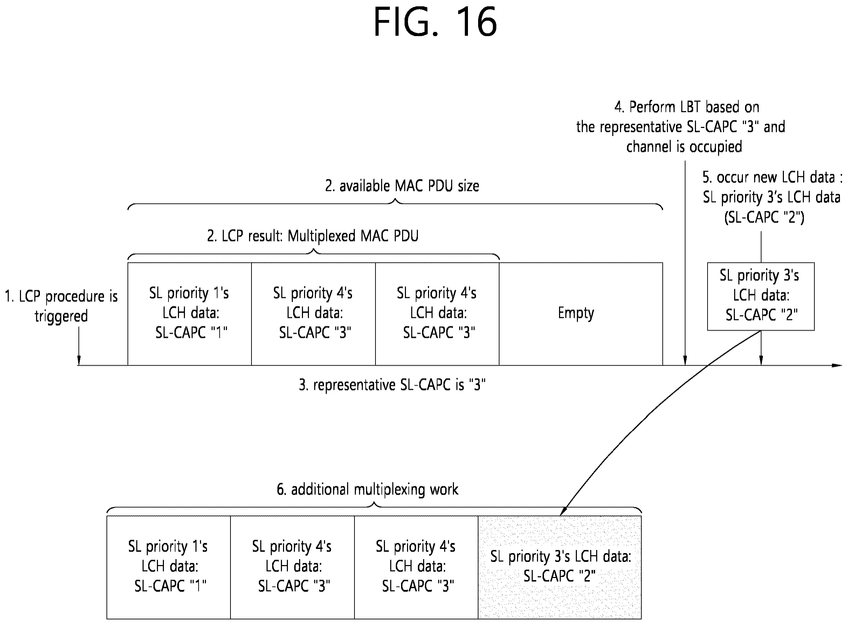

FIG. 16 shows a procedure for generating a MAC PDU when new sidelink data occurs from the logical channel after succeeding in sidelink LBT, based on an embodiment of the present disclosure. The embodiment of FIG. 16 may be combined with various embodiments of the present disclosure.

Referring to FIG. 16, in another embodiment of the present disclosure, for example, when logical channel (LCH) data having a sidelink logical channel priority 1 (or, LCH data having an SL-CAPC value 1) and multiple LCH data having a sidelink logical channel priority 4 (or, LCH data having an SL-CAPC value 3) are generated in the logical channel of the transmitting UE, the UE may generate a MAC PDU by including, in order from the highest logical channel priority, data (e.g., MAC CE, MAC SDU) having the highest logical channel priority in the MAC PDU. For example, the UE may, by a logical channel prioritization (LCP) procedure (e.g., FIG. 16), multiplex the LCH data having a sidelink logical channel priority 1 (or, LCH data having an SL-CAPC value 1) and the multiple LCH data having a sidelink logical channel priority 4 (or, LCH data having an SL-CAPC value 3) to generate a MAC PDU. For example, when the MAC PDU generation is completed, the transmitting UE may perform a sidelink LBT (e.g., Type 1 LBT) process to transmit the generated MAC PDU. For example, the transmitting UE may select an SL-CAPC value to perform the sidelink LBT, and for example, may perform the sidelink LBT process by applying parameters mapped to the selected SL-CAPC value. For example, (e.g., FIG. 16) the transmitting UE may select, among the SL-CAPC values related to the MAC SDUs included in the generated MAC PDU (e.g., the LCH data having a sidelink logical channel priority 1 (or, LCH data having an SL-CAPC value 1) and the LCH data having a sidelink logical channel priority 4 (or, LCH data having an SL-CAPC value 3)), an SL-CAPC value having the largest value (the larger the value, the lower the priority of the SL-CAPC), and for example, may perform the sidelink LBT operation by applying parameters mapped to the SL-CAPC value. The transmitting UE may perform the sidelink LBT by applying parameters mapped to SL-CAPC value 3, and for example, when the sidelink LBT succeeds and a channel of the unlicensed band is occupied, the transmitting UE may transmit the generated MAC PDU (or TB) through the occupied channel. For example, when the sidelink LBT succeeds and new sidelink data is newly generated in the logical channel (e.g., FIG. 16), and the SL-CAPC value related to the newly generated sidelink data (e.g., in FIG. 16, the SL-CAPC value is "2") is less than or equal to the representative SL-CAPC value of the MAC PDU generated before performing the sidelink LBT, the transmitting UE may additionally multiplex the newly generated sidelink data (MAC SDU, MAC CE) into the previously generated MAC PDU, and/or may transmit the newly generated sidelink data together via the occupied channel. For example, when sidelink data having an SL-CAPC with a higher priority than the representative SL-CAPC priority of the MAC PDU generated before performing the sidelink LBT is newly generated in the logical channel, the corresponding sidelink data may be transmitted together on the occupied channel.

Referring to FIG. 16, in another embodiment of the present disclosure, for example, when logical channel (LCH) data having a sidelink logical channel priority 1 (or, LCH data having an SL-CAPC value 1) and multiple LCH data having a sidelink logical channel priority 4 (or, LCH data having an SL-CAPC value 3) are generated in the logical channel of the transmitting UE, the UE may generate a MAC PDU by including, in order from the highest logical channel priority, data (e.g., MAC CE, MAC SDU) having the highest logical channel priority in the MAC PDU, and for example, the UE may, by a logical channel prioritization (LCP) procedure (e.g., FIG. 16), multiplex the LCH data having a sidelink logical channel priority 1 (or, LCH data having an SL-CAPC value 1) and the multiple LCH data having a sidelink logical channel priority 4 (or, LCH data having an SL-CAPC value 3) to generate a MAC PDU, and for example, when the MAC PDU generation is completed, the transmitting UE may perform a sidelink LBT (e.g., Type 1 LBT) process to transmit the generated MAC PDU, and for example, the transmitting UE may select an SL-CAPC value to perform the sidelink LBT and may perform the sidelink LBT process by applying parameters mapped to the selected SL-CAPC value, and for example, (e.g., FIG. 16) the transmitting UE may select, among the SL-CAPC values **related to** the MAC SDUs included in the generated MAC PDU (e.g., the LCH data having a sidelink logical channel priority 1 (or, LCH data having an SL-CAPC value 1) and the LCH data having a sidelink logical channel priority 4 (or, LCH data having an SL-CAPC value 3)), an SL-CAPC value having the largest value (the larger the value, the lower the priority of the SL-CAPC), and may perform the sidelink LBT operation by applying parameters mapped to the SL-CAPC value, and for example, the transmitting UE may perform the sidelink LBT by applying parameters mapped to SL-CAPC value 3, and when the sidelink LBT succeeds and a channel of the unlicensed band is occupied, the transmitting UE may transmit the generated MAC PDU (or TB) through the occupied channel, and for example, when the transmitting UE succeeds in the sidelink LBT and new sidelink data is newly generated in the logical channel (e.g., FIG. 16), and the SL-CAPC value related to the newly generated sidelink data (e.g., in FIG. 16, the SL-CAPC value is "2") is less than or equal to the representative SL-CAPC value of the MAC PDU generated before performing the sidelink LBT, the transmitting UE may newly generate a MAC PDU for the newly generated sidelink data (MAC SDU), and for example, may select a new sidelink grant other than the sidelink grant selected for transmission of the MAC PDU generated before the sidelink LBT, and may select a sidelink grant to transmit the newly generated MAC PDU, and (simultaneously) the MAC PDU may be transmitted through the occupied channel of the unlicensed band.

For example, in another embodiment of the present disclosure, (e.g., FIG. 16) when logical channel (LCH) data having a sidelink logical channel priority 1 (or, LCH data having an SL-CAPC value 1) and multiple LCH data having a sidelink logical channel priority 4 (or, LCH data having an SL-CAPC value 3) are generated in the logical channel of the transmitting UE, the UE may generate a MAC PDU by including, in order from the highest logical channel priority, data (e.g., MAC SDU, MAC CE) having the highest logical channel priority in the MAC PDU. For example, the UE may, by a logical channel prioritization (LCP) procedure as in Embodiment 1 below, multiplex the LCH data having a sidelink logical channel priority 1 (or, LCH data having an SL-CAPC value 1) and the multiple LCH data having a sidelink logical channel priority 4 (or, LCH data having an SL-CAPC value 3) to generate a MAC PDU. For example, when the MAC PDU generation is completed, the transmitting UE may perform a sidelink LBT (e.g., Type 1 LBT) process to transmit the generated MAC PDU. For example, the transmitting UE may select an SL-CAPC value to perform the sidelink LBT and may perform the sidelink LBT process by applying parameters mapped to the selected SL-CAPC value. For example, (e.g., FIG. 16) the transmitting UE may select, among the SL-CAPC values related to the MAC SDUs included in the generated MAC PDU (e.g., the LCH data having a sidelink logical channel priority 1 (or, LCH data having an SL-CAPC value 1) and the LCH data having a sidelink logical channel priority 4 (or, LCH data having an SL-CAPC value 3)), an SL-CAPC value having the largest value (the larger the value, the lower the priority of the SL-CAPC), and may perform the sidelink LBT operation by applying parameters mapped to the SL-CAPC value. For example, the transmitting UE may perform the sidelink LBT by applying parameters mapped to SL-CAPC value 3, and when the sidelink LBT succeeds and a channel of the unlicensed band is occupied, the transmitting UE may transmit the generated MAC PDU (or TB) through the occupied channel. For example, when the transmitting UE succeeds in the sidelink LBT and new sidelink data is newly generated in the logical channel (e.g., FIG. 16), and the SL-CAPC value related to the newly generated sidelink data (e.g., in FIG. 16, the SL-CAPC value is "2") is less than or equal to the representative SL-CAPC value of the MAC PDU generated before performing the sidelink LBT, the transmitting UE may newly generate a MAC PDU for the newly generated sidelink data (MAC SDU), and for example, may transmit the newly generated MAC PDU through the occupied channel of the unlicensed band.

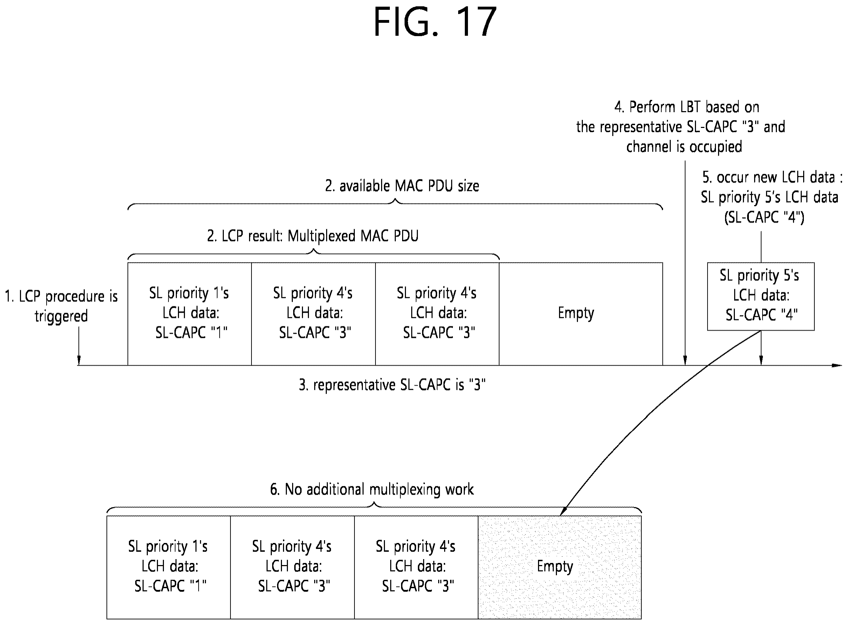

FIG. 17 shows a procedure for generating a MAC PDU when new sidelink data occurs from the logical channel after succeeding in sidelink LBT, based on an embodiment of the present disclosure. The embodiment of FIG. 17 may be combined with various embodiments of the present disclosure.

Referring to FIG. 17, in another embodiment of the present disclosure, for example, it may be configured such that, after performing sidelink LBT, newly generated sidelink data is not additionally multiplexed into a MAC PDU generated before performing the LBT. For example, it may be configured such that the newly generated sidelink data cannot be transmitted together with the previously generated MAC PDU. For example, (e.g., FIG. 17) when the transmitting UE succeeds in the sidelink LBT and new sidelink data occurs in the logical channel, and an SL-CAPC value (e.g., in FIG. 17, the SL-CAPC value is "4") related to the newly generated sidelink data is greater than the representative SL-CAPC value of the MAC PDU generated before performing the sidelink LBT, the transmitting UE may not additionally multiplex the newly generated sidelink data (e.g., MAC SDU, MAC CE) into the previously generated MAC PDU, and may not transmit the newly generated sidelink data via the occupied channel. For example, when sidelink data having an SL-CAPC with a lower priority than the representative SL-CAPC priority of the MAC PDU generated before the sidelink LBT is newly generated in the logical channel, the corresponding sidelink data may not be transmitted together on the occupied channel.

In another embodiment of the present disclosure, at least one of the following logical channel prioritization (LCP) operations of a UE may be proposed. For example, when data occurs in a logical channel, the UE may perform Type 1 LBT for transmission of the corresponding logical channel data. In addition, for example, the transmitting UE may select a representative SL-CAPC value of the logical channel data to apply parameters for performing Type 1 LBT. The transmitting UE may perform the Type 1 LBT by applying the parameters mapped to the selected representative SL-CAPC value. In addition, for example, the transmitting UE (e.g., a COT responding UE) may, upon receiving a shared channel occupancy time (COT) from a peer UE (e.g., a COT initiating UE), perform a Type 2 series of LBT (e.g., Type 2A LBT, Type 2B LBT, or Type 2C LBT) within the received shared COT to transmit an SL TB. In addition, for example, the transmitting UE (e.g., a UE that can directly perform Type 1 LBT to generate a COT, and/or perform Type 2 LBT within the generated COT to transmit logical channel data) may directly perform Type 1 LBT to generate a COT, and/or perform Type 2 LBT within the generated COT to transmit logical channel data. Here, for example, the transmitting UE (e.g., a UE that directly performs Type 1 LBT to generate a COT and performs Type 2 LBT within the generated COT to transmit logical channel data) may select an SL-CAPC value for generating a COT and performing Type 1 LBT for transmission of logical channel data. Here, for example, when additional sidelink data occurs in the logical channel, the transmitting UE may filter only additional logical channel data having an SL-CAPC value less than or equal to (or greater than or equal to) the representative SL-CAPC value previously selected for transmission of the logical channel data, and/or may multiplex the filtered logical channel data into the MAC PDU for the previous logical channel data, and/or may transmit the multiplexed MAC PDU. In addition, for example, the transmitting UE (e.g., a UE that can directly perform Type 1 LBT to generate a COT, and/or perform Type 2 LBT within the generated COT to transmit logical channel data) may perform Type 2 LBT within the generated COT, and/or when there is logical channel data available for transmission and a sidelink grant (resource) for transmission of the logical channel data, if the sidelink grant (resource) is not included in the COT generated by the UE, a resource reselection operation or a resource regeneration operation may be triggered, and/or a resource reselection or a resource regeneration operation may be triggered/performed so that the resource is included in the COT generated by the UE.

In the embodiments of the present disclosure, for example, although UE operations have been proposed for determining whether to perform an additional multiplexing operation (e.g., aggregating newly generated MAC SDUs into an already generated MAC PDU) for newly generated logical channel data based on the SL-CAPC value related to the MAC SDU or logical channel data (LCH data) included in the generated MAC PDU, or whether to generate a new sidelink grant, the embodiments and proposals of the present disclosure may also be extended and applied when the SL-CAPC value to be used by the UE in a sidelink mode 1 grant (e.g., PDCCH or DCI) is indicated.

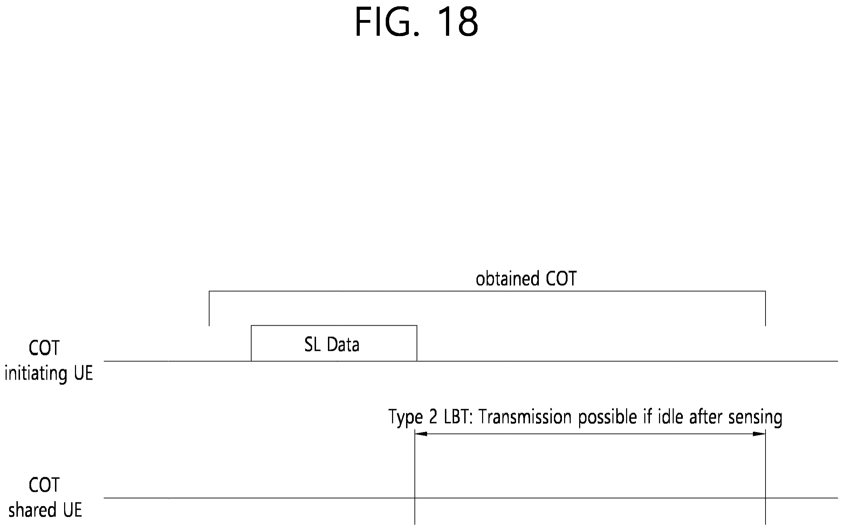

FIG. 18 shows a transmission method within a shared COT, based on an embodiment of the present disclosure. The embodiment of FIG. 18 may be combined with various embodiments of the present disclosure.

Referring to FIG. 18, according to an embodiment of the present disclosure, for example, a UE that generates a shared channel occupancy time (COT) (e.g., a COT initiating UE) may share the secured COT with a peer UE as in the embodiments below (e.g., FIG. 18). For example, a UE that has generated/acquired a shared COT may transmit the secured shared COT to a peer UE via sidelink control information (SCI), a medium access control control element (MAC CE), or a PC5-RRC message. For example, when delivering the secured COT via an SCI, the secured COT may be transmitted to a destination UE of a unicast link (e.g., a pair of L1/L2 Source ID and L1/L2 Destination ID), or, for example, to a destination UE of a groupcast/broadcast link (e.g., a groupcast/broadcast L1 Destination ID). For example, when delivering the secured COT via a MAC CE (e.g., an SL channel occupancy time (COT) information MAC CE), the secured COT may be transmitted to a destination UE of a unicast link (e.g., a pair of L1/L2 Source ID and L1/L2 Destination ID), or to a destination UE of a groupcast/broadcast link (e.g., a groupcast/broadcast L1/L2 Destination ID). For example, a UE that has received the shared COT from the UE that generated the shared COT (e.g., a COT responding UE) may, within the shared COT, after the transmission of the UE that generated the COT is completed, perform a Type 2 LBT (e.g., Type 2A LBT or Type 2B LBT: if sensing confirms that the channel has been idle for a specific period, SL data to be transmitted by the UE within the shared COT may be transmitted; e.g., Type 2C LBT: SL data transmission may be performed immediately without a sensing period) operation. For example, the information of the shared COT delivered from the COT initiating UE to the COT responding UE may include information such as the remaining duration of the shared COT, the starting offset of the shared COT, and the SL-CAPC value to be used by the COT responding UE.

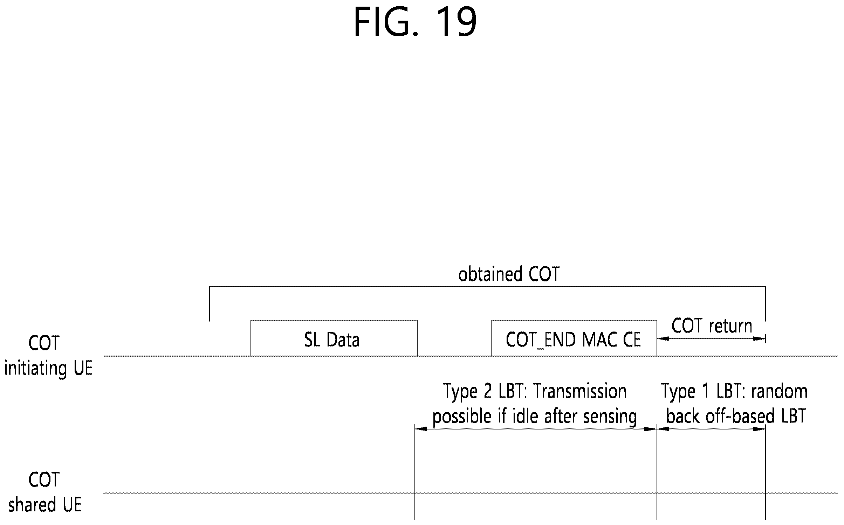

FIG. 19 shows an operation related to a shared COT, based on an embodiment of the present disclosure. The embodiment of FIG. 19 may be combined with various embodiments of the present disclosure.

Referring to FIG. 19, according to an embodiment of the present disclosure, for example, a UE that has generated a COT may return (release) the secured COT. A UE that has generated and/or secured a COT and shared it with a peer UE may transmit a COT END MAC CE to the peer UE to return (release) the secured COT. The COT END MAC CE may be transmitted to a destination UE of a unicast link (a pair of L1/L2 Source ID and L1/L2 Destination ID), and/or the COT END MAC CE may be transmitted to a destination UE of a groupcast/broadcast link (a groupcast/broadcast L1/L2 Destination ID). Referring to FIG. 19, a UE that has received the COT END MAC CE may perform Type 1 LBT from the time of receiving the COT END MAC CE until the expiration of the previously shared COT to transmit SL data. Until receiving the COT END MAC CE, the UE that has received the shared COT may perform Type 2 LBT within the shared COT until it expires to transmit SL data.

For example, the COT release described above may be performed not only via a MAC CE but also via an SCI or a PC5-RRC message. Information for COT release/termination may be transmitted via an SCI to a destination UE of a unicast link (a pair of L1 Source ID and L1 Destination ID), and/or to a destination UE of a groupcast/broadcast link (a groupcast/broadcast L1 Destination ID).

According to an embodiment of the present disclosure, for example, a COT responding UE may signal (e.g., via SCI, MAC CE, or PC5 RRC message) an indicator to the COT initiating UE indicating whether to return (release) the shared COT.

According to an embodiment of the present disclosure, for example, a COT responding UE may signal (e.g., via SCI, MAC CE, or PC5 RRC message) an indicator to the COT initiating UE that it will use or will not use the shared COT (whether to return (release) the shared COT).

In the present disclosure, a request (e.g., explicit request)-based COT sharing method is also proposed. For example, a UE may transmit a request (e.g., explicit request) to a peer UE to share its COT (via MAC CE, SCI, or PC5 RRC message). For example, the UE receiving the COT sharing request message (e.g., COT initiating UE) may perform Type 1 LBT to generate a COT. For example, the generated COT may be forwarded to the UE that transmitted the "COT sharing request message (via MAC CE, SCI, or PC5 RRC message)."

For example, a UE that wants to receive a shared COT (e.g., COT responding UE) may trigger a COT request, and/or may transmit a "COT sharing request message" to a peer UE to receive COT information from the peer UE. For example, the UE requesting COT sharing may transmit to the peer UE a "COT sharing request message" including at least one of the following information.
1. COT request indication
2. In order for the UE receiving the "COT sharing request message" to be able to transmit a COT information message in response within a required time ((upper bound) latency budget (or requirement)), (upper bound) latency budget (or requirement) information may be included, for example, the UE receiving the "COT sharing request message" may have to deliver the generated COT information (information) to the UE that transmitted the "COT sharing request message" within the (upper bound) latency budget (or requirement), for example, the (upper bound) latency budget (or requirement) information may be transmitted via a separate PC5 RRC message or SCI instead of the "COT sharing request message."
3. QoS profile information for SL data of the UE requesting COT sharing.
4. SL priority for SL data of the UE requesting COT sharing.
5. Preferred maximum COT duration: for example, the maximum duration of the COT that the UE has an interest in receiving.
6. Preferred COT start time: recommended COT start time.
7. Preferred COT end time: recommended COT end time.
8. Remaining PDB (Packet Delay Budget) for SL data of the UE requesting COT sharing.
9. Upper bound for transmitting the COT sharing information (latency requirement for the UE receiving the COT request message to transmit the COT information). For example, the UE receiving the COT request message may have to deliver a message including the COT information to the UE that transmitted the COT request message within this time.
10. SL-CAPC value to be applied when generating the COT (e.g., the lowest SL-CAPC), for example, the representative SL-CAPC value/candidate SL-CAPC value for a packet or TB to be transmitted by the UE requesting the COT.
11. Resource block (set) to be used for COT generation.
12. Sidelink sensing-related information (sensing period, sidelink priority, resource block) to be used for an operation for COT generation (e.g., sidelink sensing).
13. (Remaining) Packet Delay Budget (PDB) of SL data to be transmitted by applying the COT.
14. Maximum number of transmissions allowed for SL data to be transmitted by applying the COT.
15. Cast type (unicast or groupcast or broadcast) information of SL data to be transmitted by applying the COT.
16. SL DRX configuration information to be used by the UE applying the COT when the UE requesting the COT supports SL DRX operation.
17. (Recommended) Energy Detection (ED) Threshold.

For example, when generating a COT, the UE may perform energy detection (sensing, channel access procedure, energy detection) for an unlicensed band channel based on the ED threshold, and may determine that the channel is idle if the energy level of the channel is less than or equal to the ED threshold, and/or may determine that the channel is busy if the energy level of the channel is greater than or equal to the ED threshold. In another embodiment, the (recommended) energy detection (ED) threshold may be delivered not only by the UE to the peer UE or the base station as assistance information but also may be directly configured by the base station and delivered to the UE, and the UE may apply the (recommended) energy detection (ED) threshold received from the base station to perform channel energy detection (sensing, channel access procedure, energy detection procedure).

The proposed parameter(s) to be included in the COT sharing request message in the present disclosure may also be equally applied when a UE transmits a COT sharing request message to a base station to have the base station configure a COT to be used by the UE. For example, the proposed parameter(s) may also be included in a COT sharing request message transmitted to the base station (e.g., via sidelink UE information, UE assistance information, or an RRC message).

For example, the UE transmitting the "COT sharing request message" may transmit (upper bound) latency budget (or requirement) information to the peer UE (the UE that has to generate and share the COT). For example, the UE receiving the "COT sharing request message" may have to deliver the generated COT information (information) to the UE that transmitted the "COT sharing request message" within the (upper bound) latency budget (or requirement).

According to an operation method of a UE transmitting a "COT sharing request message" in an embodiment of the present disclosure, for example, the UE transmitting the "COT sharing request message" may expect that the peer UE will transmit a COT information message to the UE within the (upper bound) latency budget (or requirement), and may monitor the COT information message during the (upper bound) latency budget (or requirement). For example, after the (upper bound) latency budget (or requirement) elapses, the monitoring operation for the COT information message may be stopped. For example, when the UE transmits the "COT sharing request message," it may start a timer, may operate the timer during the (upper bound) latency budget (or requirement), and may monitor the COT information message until the timer expires. For example, after the timer expires, the monitoring operation for the COT information message may be stopped. For example, the COT sharing request may be triggered, and/or when the UE transmitting the COT sharing request message supports SL DRX operation, the COT sharing request message may be transmitted, and/or during the (upper bound) latency budget (or requirement), the UE may operate in SL DRX active time/mode (a mode in which PSCCH/PSSCH monitoring operation for data reception from the peer UE is performed) to monitor the COT sharing message (a message including the requested COT information) transmitted by the peer UE. For example, even in an SL DRX inactive time/mode (a mode in which PSCCH/PSSCH monitoring operation for data reception from the peer UE does not have to be performed), during the (upper bound) latency budget (or requirement) or for the timer operation period set to the (upper bound) latency budget (or requirement) after starting the timer, the SL DRX active time may be extended to monitor the COT sharing message (a message including the requested COT information) transmitted by the peer UE. If the COT sharing message is received before the timer expires, the timer may be stopped, and/or the SL DRX mode may transition to an inactive time/mode, and the original SL DRX inactive time/mode operation may be performed (for example, during the SL DRX inactive period, PSCCH/PSSCH monitoring operation for data reception from the peer UE may not be performed).

According to an operation method of a UE receiving a "COT sharing request message" in an embodiment of the present disclosure, for example, the UE receiving the "COT sharing request message" may have to transmit a COT information message to the UE that transmitted the "COT sharing request message" within the (upper bound) latency budget (or requirement). For example, when the UE receives the "COT sharing request message," it may start a timer, and/or before the timer expires, it may generate the COT and transmit the COT information message to the UE that transmitted the "COT sharing request message." For example, the UE receiving the "COT sharing request message" may operate the timer during the (upper bound) latency budget (or requirement). For example, before the timer expires, the COT information message may be transmitted. For example, after the timer expires, the COT information message transmission operation may be canceled.

According to a timer starting condition (a timer for transmitting a COT information message, e.g., a timer started by a UE receiving a "COT sharing request message") in an embodiment of the present disclosure, for example, after the UE receives the "COT sharing request message," it may determine to transmit the generated COT information, and/or may trigger the transmission of the COT information message, and/or when the transmission of the COT information message is triggered, the timer may be started.

According to a timer stopping condition (a timer for transmitting a COT information message, a timer started by a UE receiving a "COT sharing request message") in an embodiment of the present disclosure, for example, when the UE that has received the "COT sharing request message" generates a COT information message (e.g., the COT information message is generated by the multiplexing and assembly procedure), the UE may stop the timer.

According to a COT information message transmission (or reporting) cancellation condition in an embodiment of the present disclosure, a UE that has received a "COT sharing request message" and started a timer for transmitting a COT information message may cancel the triggered COT information message transmission when the timer for transmitting the COT information message expires. In addition, for example, a UE that has received a "COT sharing request message" and started a timer for transmitting a COT information message may cancel the triggered COT information message transmission when the COT information message is generated (e.g., the COT information message is generated by the multiplexing and assembly procedure) (meaning that the transmission is not completed, but the generated COT information message will be transmitted, and/or that no further transmission and reporting of the COT information message is required, and thus the triggered COT information message transmission operation is canceled, for example, the generated COT information message may be transmitted to the UE that transmitted the "COT sharing request message").

The proposal(s) of the present disclosure may be applied not only to a case of receiving a "COT sharing request message" but also to a case in which a UE directly generates a COT based on a condition without receiving a "COT sharing request message" and the transmission of a COT information message is triggered. For example, when the transmission of a COT information message is triggered, the UE may start a timer, and/or before the timer expires, may transmit the COT information message. For example, the timer stopping condition and the COT information message reporting cancellation condition may be the same as those proposed above.

The proposal(s) of the present disclosure may be a solution applicable not only to the case of requesting COT sharing but also to a case in which a UE requests a peer UE to provide FBE (Semi-static channel access procedure frame based equipment (FBE)) configuration (FFP (fixed frame period) (period information, FFP start offset)).

For example, whether or not the (some) proposed method/rule of the present disclosure is applied and/or related parameter(s) (e.g., threshold value(s)) may be configured (differently or independently) for each SL-CAPC. For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT, etc.). For example, whether or not the (some) proposed method/rule of the present disclosure is applied and/or related parameter(s) (e.g., threshold value(s)) may be configured specifically (or differently or independently) depending on whether to apply frame based LBT (FBE). For example, whether or not the (some) proposed method/rule of the present disclosure is applied and/or related parameter(s) (e.g., threshold value(s)) may be configured specifically (or differently or independently) depending on whether to apply load based LBT (LBE).

Whether or not the (some) proposed method/rule of the present disclosure is applied and/or related parameter(s) (e.g., threshold value(s)) may be configured specifically (or differently or independently) for whether LBT is successful/failed, for each LBT-related energy detection level, for each sidelink channel (PSCCH/PSSCH, PSFCH, SL-SSB), for whether multi-consecutive slot transmission (MCSt) is applied, for whether multi-PSFCH occasion is applied, for each order/position of each resource included in MCSt, for whether multiple starting point in one slot is configured, for whether 1st starting point (or 2nd starting point) is applied, etc.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured specifically (or differently or independently) depending on whether a PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

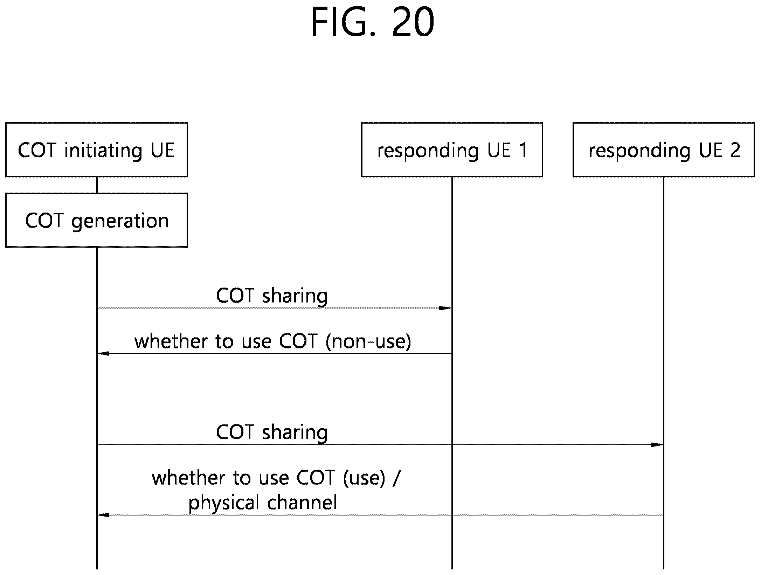

FIG. 20 shows a method for performing wireless communication related to LBT, based on an embodiment of the present disclosure. The embodiment of FIG. 20 may be combined with various embodiments of the present disclosure.

Referring to FIG. 20, according to an embodiment of the present disclosure, for example, a UE may generate/obtain a CO/COT (hereinafter collectively referred to as COT). For example, based on the UE having succeeded in LBT, the UE may generate/obtain a COT. For example, the COT may not exceed the maximum channel occupancy time (max COT time) based on the CAPC related to transmission.

For example, a UE may share a COT with a peer UE. For example, a UE generating a COT may share the secured COT with a peer UE. For example, a UE that has generated/secured a COT may transmit, to the peer UE via an SCI, information related to the secured COT (e.g., (remaining) COT duration, cast type, COT sharing-related ID (e.g., source ID, destination ID)). For example, a UE that has generated/secured a COT may transmit information related to the secured COT to the peer UE via a MAC CE. For example, a UE that has generated/secured a COT may transmit information related to the secured COT to the peer UE via a PC5-RRC message. For example, when delivering the secured COT via an SCI, the UE may transmit information related to the secured COT to a destination UE of a unicast link (a pair of L1 Source ID and L1 Destination ID), and/or may transmit information related to the secured COT to a destination UE of a groupcast/broadcast link (a groupcast/broadcast L1 Destination ID). For example, when delivering information related to the secured COT via a MAC CE, the UE may transmit the secured COT to a destination UE of a unicast link (a pair of L1/L2 Source ID and L1/L2 Destination ID), and/or may transmit information related to the secured COT to a destination UE of a groupcast/broadcast link (a groupcast/broadcast L1/L2 Destination ID).

For example, a UE that has received a COT from a UE that generated the COT may, within the shared COT, perform a Type 2 LBT operation after the transmission of the UE that generated the COT is completed. For example, the Type 2 LBT may include Type 2A LBT, Type 2B LBT, or Type 2C LBT. For example, in the case of Type 2A LBT or Type 2B LBT, when the UE that has performed a sensing operation confirms that the channel has been idle for a specific period, the UE may transmit SL data to be transmitted by itself within the shared COT. For example, in the case of Type 2C LBT, the UE may perform SL data transmission immediately without sensing for a specific period.

For example, even when a channel occupancy time (COT) is generated and/or shared, communication performed within the COT may continuously fail due to transmission by another device, interference, and the like in the unlicensed band. If communication performed within the COT continuously fails due to aperiodic transmission by another device, transmission of traffic having high importance, and the like within the COT, and the UE continuously attempts communication within the COT despite this, unnecessary resource waste may occur, and reliability of communication may not be ensured.

According to an embodiment of the present disclosure, for example, (based on the reception of information related to the secured shared COT (included in an SCI, MAC CE, PC5-RRC message, etc.)), a COT responding (receiving) UE may transmit, to a COT initiating (initiator) UE, information related to whether to use the COT. For example, (based on the reception of information related to the secured shared COT), the COT responding (receiving) UE may determine whether to use the COT. For example, the information related to whether to use the COT may include information indicating not to use the COT. For example, the information related to whether to use the COT may include information related to a time region in which the COT is not used. For example, the COT responding UE may perform a pre-transmission Type 2 channel access procedure within a region other than the time region in which the COT is not used. For example, the COT responding UE may perform a pre-transmission Type 1 channel access procedure within the time region in which the COT is not used.

For example, (based on the reception of the information related to whether to use the COT), the COT initiating (initiator) UE may transmit the secured COT information to another COT responding UE. For example, the other COT responding UE may transmit, to the COT initiating UE, information related to whether to use the COT. For example, the information related to whether to use the COT may include information indicating to use the COT. For example, the information related to whether to use the COT may include information related to a time region in which the COT is used. For example, the information related to whether to use the COT may be transmitted via a physical channel (e.g., PSSCH, PSCCH, PSFCH, PC5-RRC, etc.). For example, the other COT responding UE may perform a pre-transmission Type 2 channel access procedure within the time region in which the COT is used. For example, when the other COT responding UE succeeds in the Type 2 channel access procedure, the other COT responding UE may perform transmission to the COT initiating UE (within the COT).

According to various embodiments of the present disclosure, when a UE that has received a shared COT determines that it is necessary not to use the COT due to transmission by another device, interference, and the like in the unlicensed band, by transmitting information related to not using the COT, unnecessary resource waste may not occur, and reliability of SL communication may be ensured.

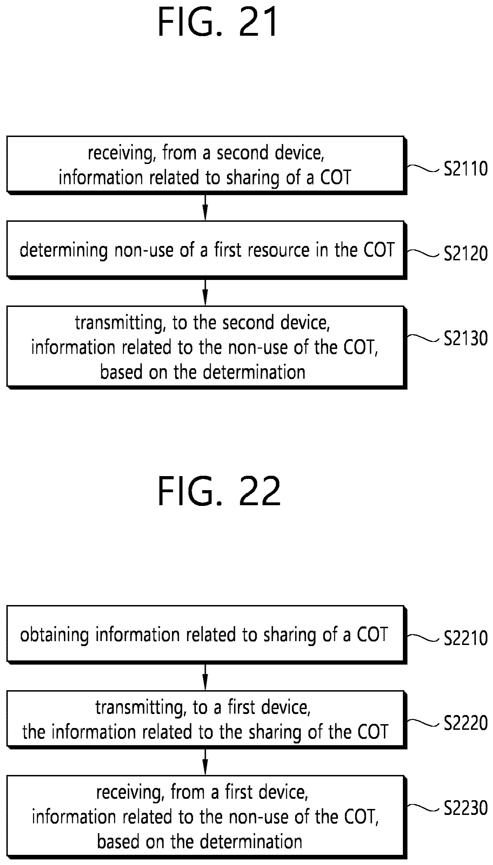

FIG. 21 shows a method for a first device to perform wireless communication, based on an embodiment of the present disclosure. The embodiment of FIG. 21 may be combined with various embodiments of the present disclosure.

Referring to FIG. 21, based on an embodiment of the present disclosure, in step S2110, for example, the first device may receive, from a second device, information related to sharing of a channel occupancy time (COT). In step S2120, for example, the first device may determine non-use of a first resource in the COT. In step S2130, for example, the first device may transmit, to the second device, information related to the non-use of the COT, based on the determination.

Additionally or alternatively, the information related to the non-use of the COT may be transmitted via a medium access control (MAC) control element (CE).

Additionally or alternatively, the information related to the non-use of the COT may be transmitted in a PC5 radio resource control (PC5-RRC) message.

Additionally or alternatively, the information related to the non-use of the COT may be transmitted in control information.

Additionally or alternatively, the control information may include information related to a reserved resource.

Additionally or alternatively, the information related to the non-use of the COT may be transmitted in control information, and

Additionally or alternatively, the control information may include information related to at least one of a source ID or a destination ID.

Additionally or alternatively, the information related to the non-use of the COT may include information representing whether to use the COT.

Additionally or alternatively, the information related to the non-use of the COT may include information related to a time domain among time domains in the COT that is not used.

Additionally or alternatively, based on that the information related to the sharing of the COT has been received, the information related to the non-use of the COT may be transmitted.

Additionally or alternatively, the information related to the sharing of the COT may be transmitted in control information.

Additionally or alternatively, the control information may include information related to a reserved resource.

Additionally or alternatively, the information related to the sharing of the COT may include information related to a remaining COT duration.

Additionally or alternatively, the information related to the sharing of the COT may include information related to at least one of a source ID or a destination ID.

Additionally or alternatively, before the transmission on the non-use resource including the first resource in the COT, a channel access procedure may be performed.

Additionally or alternatively, the channel access procedure includes a channel access procedure in which a sensing duration is random.

Additionally or alternatively, (i) before the non-use resource including the first resource in the COT, and (ii) before a transmission on a second resource in the COT, a channel access procedure may be performed.

Additionally or alternatively, the channel access procedure may include a channel access procedure in which a sensing duration is deterministic.

The proposed method can be applied to devices based on various embodiments of the present disclosure. The proposed method can be applied to devices based on various embodiments of the present disclosure. First, the memory 104 of the first device 100 may store instructions that, based on being executed by the processor 102, cause the first device (e.g., the processor 102, the transceiver 106) to perform operations. For example, the operations may comprise at least one of: receiving, from a second device, information related to sharing of a channel occupancy time (COT); determining non-use of a first resource in the COT; and transmitting, to the second device, information related to the non-use of the COT, based on the determination.

In an embodiment, a first device adapted to perform wireless communication is provided. The first device may comprise: at least one transceiver; at least one processor; and at least one memory connected to the at least one processor and storing instructions that, based on being executed by the at least one processor, cause the first device (e.g., at least one processor 102, at least one transceiver 106) to perform operations. For example, the operations may comprise at least one of: receiving, from a second device, information related to sharing of a channel occupancy time (COT); determining non-use of a first resource in the COT; and transmitting, to the second device, information related to the non-use of the COT, based on the determination.

In an embodiment, a processing device adapted to control a first device is provided. The processing device may comprise: at least one processor; and at least one memory connected to the at least one processor and storing instructions that, based on being executed by the at least one processor, cause the first device (e.g., at least one processor 102, at least one transceiver 106) to perform operations. For example, the operations may comprise at least one of: receiving, from a second device, information related to sharing of a channel occupancy time (COT); determining non-use of a first resource in the COT; and transmitting, to the second device, information related to the non-use of the COT, based on the determination.

In an embodiment, a non-transitory computer-readable storage medium storing instructions is provided. The instructions may cause a first device (e.g., at least one processor 102, at least one transceiver 106) to perform operations. For example, the operations may comprise at least one of: receiving, from a second device, information related to sharing of a channel occupancy time (COT); determining non-use of a first resource in the COT; and transmitting, to the second device, information related to the non-use of the COT, based on the determination.

FIG. 22 shows a method for a second device to perform wireless communication, based on an embodiment of the present disclosure. The embodiment of FIG. 22 may be combined with various embodiments of the present disclosure.

Referring to FIG. 22, based on an embodiment of the present disclosure, in step S2210, for example, the second device may obtain information related to sharing of a channel occupancy time (COT). In step S2220, for example, the second device may transmit, to a first device, the information related to the sharing of the COT. In step S2230, for example, the second device may receive, from the first device, information related to the non-use of the COT, based on the determination.

Additionally or alternatively, the information related to the non-use of the COT may be transmitted via a medium access control (MAC) control element (CE).

Additionally or alternatively, the information related to the non-use of the COT may be transmitted in a PC5 radio resource control (PC5-RRC) message.

Additionally or alternatively, the information related to the non-use of the COT may be transmitted in control information.

Additionally or alternatively, the control information may include information related to a reserved resource.

Additionally or alternatively, the information related to the non-use of the COT may be transmitted in control information, and

Additionally or alternatively, the control information may include information related to at least one of a source ID or a destination ID.

Additionally or alternatively, the information related to the non-use of the COT may include information representing whether to use the COT.

Additionally or alternatively, the information related to the non-use of the COT may include information related to a time domain among time domains in the COT that is not used.

Additionally or alternatively, based on that the information related to the sharing of the COT has been received, the information related to the non-use of the COT may be transmitted.

Additionally or alternatively, the information related to the sharing of the COT may be transmitted in control information.

Additionally or alternatively, the control information may include information related to a reserved resource.

Additionally or alternatively, the information related to the sharing of the COT may include information related to a remaining COT duration.

Additionally or alternatively, the information related to the sharing of the COT may include information related to at least one of a source ID or a destination ID.

Additionally or alternatively, before the transmission on the non-use resource including the first resource in the COT, a channel access procedure may be performed.

Additionally or alternatively, the channel access procedure includes a channel access procedure in which a sensing duration is random.

Additionally or alternatively, (i) before the non-use resource including the first resource in the COT, and (ii) before a transmission on a second resource in the COT, a channel access procedure may be performed.

Additionally or alternatively, the channel access procedure may include a channel access procedure in which a sensing duration is deterministic.

The proposed method can be applied to devices based on various embodiments of the present disclosure. First, the memory 204 of the second device 200 may store instructions that, based on being executed by the processor 202, cause the second device (e.g., the processor 202, the transceiver 206) to perform operations. For example, the operations may comprise at least one of: obtaining information related to sharing of a channel occupancy time (COT); transmitting, to a first device, the information related to the sharing of the COT; and receiving, from the first device, information related to the non-use of the COT, based on the determination.

In an embodiment, a second device adapted to perform wireless communication is provided. The second device may comprise: at least one transceiver; at least one processor; and at least one memory connected to the at least one processor and storing instructions that, based on being executed by the at least one processor, cause the second device (e.g., at least one processor 202, at least one transceiver 206) to perform operations. For example, the operations may comprise at least one of: obtaining information related to sharing of a channel occupancy time (COT); transmitting, to a first device, the information related to the sharing of the COT; and receiving, from the first device, information related to the non-use of the COT, based on the determination.

In an embodiment, a processing device adapted to control a second device is provided. The processing device may comprise: at least one processor; and at least one memory connected to the at least one processor and storing instructions that, based on being executed by the at least one processor, cause the second device (e.g., at least one processor 202, at least one transceiver 206) to perform operations. For example, the operations may comprise at least one of: obtaining information related to sharing of a channel occupancy time (COT); transmitting, to a first device, the information related to the sharing of the COT; and receiving, from the first device, information related to the non-use of the COT, based on the determination.

In an embodiment, a non-transitory computer-readable storage medium storing instructions is provided. The instructions may cause a second device (e.g., at least one processor 202, at least one transceiver 206) to perform operations. For example, the operations may comprise at least one of: obtaining information related to sharing of a channel occupancy time (COT); transmitting, to a first device, the information related to the sharing of the COT; and receiving, from the first device, information related to the non-use of the COT, based on the determination.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

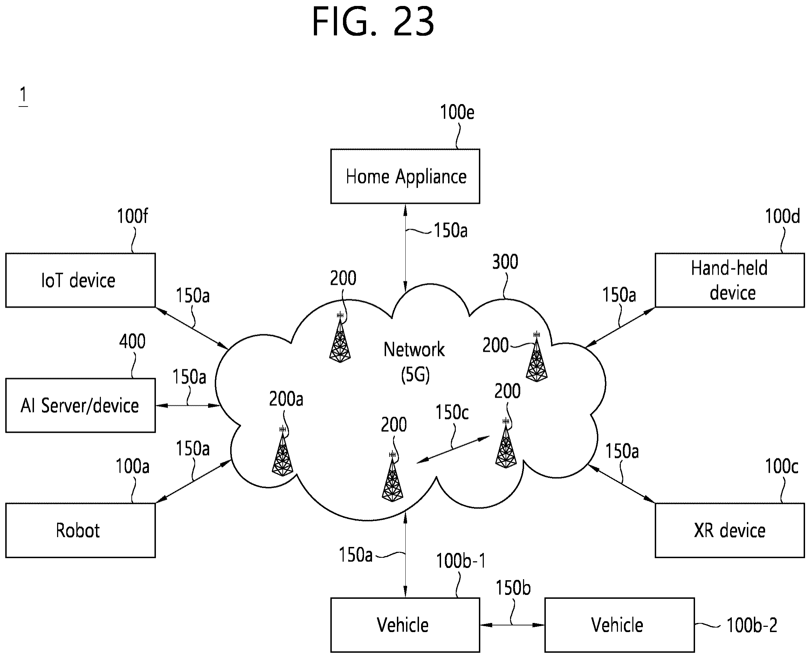

FIG. 23 shows a communication system 1, based on an embodiment of the present disclosure. The embodiment of FIG. 23 may be combined with various embodiments of the present disclosure.

Referring to FIG. 23, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

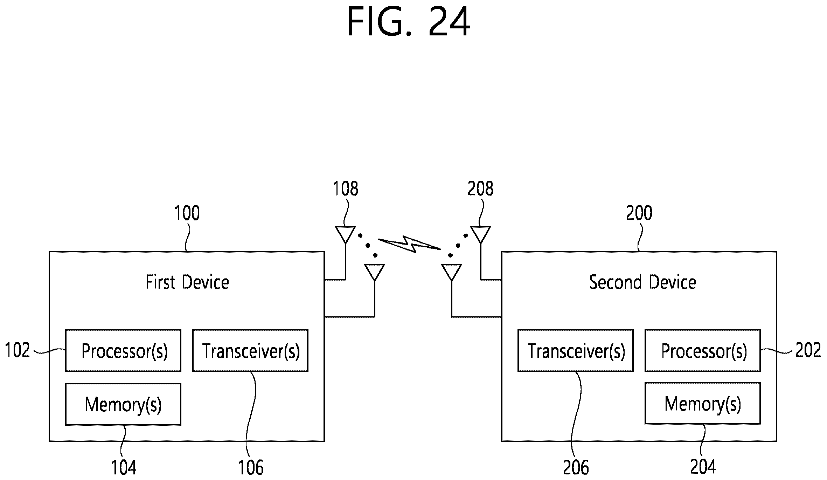

FIG. 24 shows wireless devices, based on an embodiment of the present disclosure. The embodiment of FIG. 24 may be combined with various embodiments of the present disclosure.

Referring to FIG. 24, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

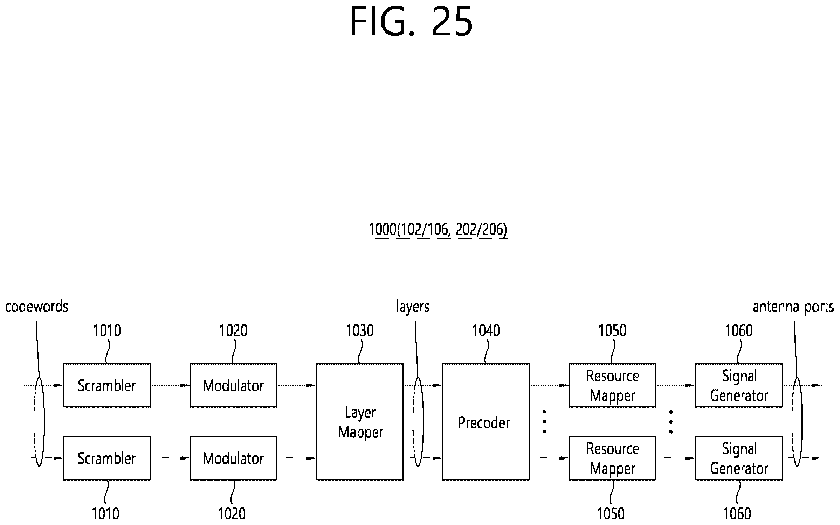

FIG. 25 shows a signal process circuit for a transmission signal, based on an embodiment of the present disclosure. The embodiment of FIG. 25 may be combined with various embodiments of the present disclosure.

Referring to FIG. 25, a signal processing circuit 1000 may include scramblers 1010, modulators 1020, a layer mapper 1030, a precoder 1040, resource mappers 1050, and signal generators 1060. An operation/function of FIG. 25 may be performed, without being limited to, the processors 102 and 202 and/or the transceivers 106 and 206 of FIG. 24. Hardware elements of FIG. 25 may be implemented by the processors 102 and 202 and/or the transceivers 106 and 206 of FIG. 24. For example, blocks 1010 to 1060 may be implemented by the processors 102 and 202 of FIG. 24. Alternatively, the blocks 1010 to 1050 may be implemented by the processors 102 and 202 of FIG. 24 and the block 1060 may be implemented by the transceivers 106 and 206 of FIG. 24.

Codewords may be converted into radio signals via the signal processing circuit 1000 of FIG. 25. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 25. For example, the wireless devices (e.g., 100 and 200 of FIG. 24) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

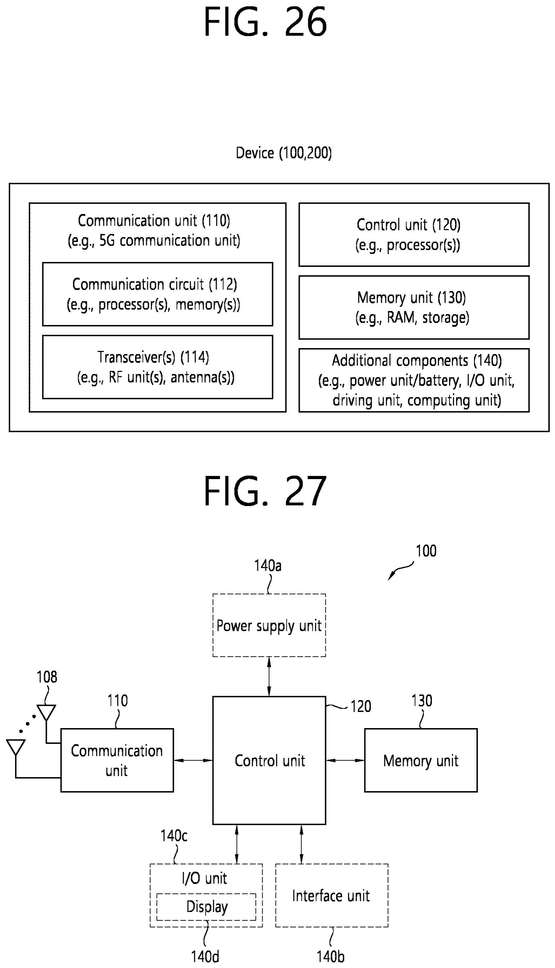

FIG. 26 shows another example of a wireless device, based on an embodiment of the present disclosure. The wireless device may be implemented in various forms according to a use-case/service (refer to FIG. 23). The embodiment of FIG. 26 may be combined with various embodiments of the present disclosure.

Referring to FIG. 26, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 24. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast terminal, a hologram device, a public safety device, an MTC device, a medicine device, a fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 26, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 26 will be described in detail with reference to the drawings.

FIG. 27 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 27 may be combined with various embodiments of the present disclosure.

Referring to FIG. 27, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 26, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

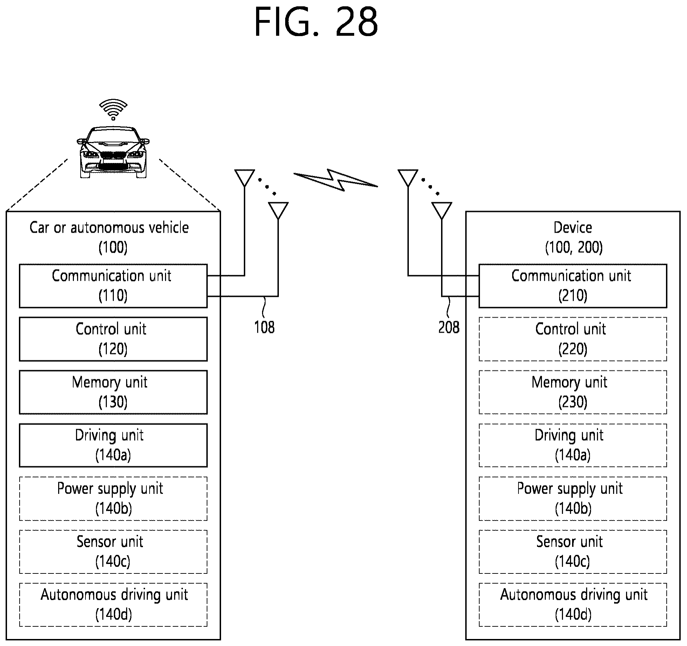

FIG. 28 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 28 may be combined with various embodiments of the present disclosure.

Referring to FIG. 28, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 26, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, comprising:
receiving, from a second device, information related to sharing of a channel occupancy time (COT);
determining non-use of a first resource in the COT; and
transmitting, to the second device, information related to the non-use of the COT, based on the determination.

2. The method of claim 1,
wherein the information related to the non-use of the COT is transmitted via a medium access control (MAC) control element (CE).

3. The method of claim 1,
wherein the information related to the non-use of the COT is transmitted in a PC5 radio resource control (PC5-RRC) message.

4. The method of claim 1,
wherein the information related to the non-use of the COT is transmitted in control information, and
wherein the control information includes information related to a reserved resource.

5. The method of claim 1,
wherein the information related to the non-use of the COT is transmitted in control information, and
wherein the control information includes information related to at least one of a source ID or a destination ID.

6. The method of claim 1,
wherein the information related to the non-use of the COT includes information representing whether to use the COT.

7. The method of claim 1,
wherein the information related to the non-use of the COT includes information related to a time domain among time domains in the COT that is not used.

8. The method of claim 1,
wherein, based on that the information related to the sharing of the COT has been received, the information related to the non-use of the COT is transmitted.

9. The method of claim 1,
wherein the information related to the sharing of the COT is transmitted in control information, and
wherein the control information includes information related to a reserved resource.

10. The method of claim 1,
wherein the information related to the sharing of the COT includes information related to a remaining COT duration.

11. The method of claim 1,
wherein the information related to the sharing of the COT includes information related to at least one of a source ID or a destination ID.

12. The method of claim 1, further comprising,
before the transmission on the non-use resource including the first resource in the COT, performing a channel access procedure,
wherein the channel access procedure includes a channel access procedure in which a sensing duration is random.

13. The method of claim 1, further comprising,
(i) before the non-use resource including the first resource in the COT, and (ii) before a transmission on a second resource in the COT, performing a channel access procedure,
wherein the channel access procedure includes a channel access procedure in which a sensing duration is deterministic.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
receiving, from a second device, information related to sharing of a channel occupancy time (COT);
determining non-use of a first resource in the COT; and
transmitting, to the second device, information related to the non-use of the COT, based on the determination.

15. A processing device adapted to control a first device, the processing device comprising:
at least one processor; and
at least one memory connected to the at least one processor and storing instructions that, based on being executed by the at least one processor, cause the first device to perform operations comprising:
receiving, from a second device, information related to sharing of a channel occupancy time (COT);
determining non-use of a first resource in the COT; and
transmitting, to the second device, information related to the non-use of the COT, based on the determination.

16. A non-transitory computer-readable storage medium storing instructions that, when executed, cause a first device to perform operations comprising:
receiving, from a second device, information related to sharing of a channel occupancy time (COT);
determining non-use of a first resource in the COT; and
transmitting, to the second device, information related to the non-use of the COT, based on the determination.

17. A method for performing wireless communication by a second device, the method comprising:
obtaining information related to sharing of a channel occupancy time (COT);
transmitting, to a first device, the information related to the sharing of the COT; and
receiving, from the second device, information related to the non-use of the COT, based on the determination.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
obtaining information related to sharing of a channel occupancy time (COT);
transmitting, to a first device, the information related to the sharing of the COT; and
receiving, from the second device, information related to the non-use of the COT, based on the determination.

19. A processing device adapted to control a second device, the processing device comprising:
at least one processor; and
at least one memory connected to the at least one processor and storing instructions that, based on being executed by the at least one processor, cause the second device to perform operations comprising:
obtaining information related to sharing of a channel occupancy time (COT);
transmitting, to a first device, the information related to the sharing of the COT; and
receiving, from the second device, information related to the non-use of the COT, based on the determination.

20. A non-transitory computer-readable storage medium storing instructions that, when executed, cause a second device to perform operations comprising:
obtaining information related to sharing of a channel occupancy time (COT);
transmitting, to a first device, the information related to the sharing of the COT; and
receiving, from the second device, information related to the non-use of the COT, based on the determination.
